(19) Europäisches Patentamt
European Patent Office
Office européen des brevets

(11) EP 2 800 967 B1

(12) **EUROPEAN PATENT SPECIFICATION**

(45) Date of publication and mention of the grant of the patent:
**22.01.2025 Bulletin 2025/04**

(21) Application number: **12826678.0**

(22) Date of filing: **24.12.2012**

(51) International Patent Classification (IPC):
***G01N 27/30*** *(2006.01)* ***G01N 27/416*** *(2006.01)*

(52) Cooperative Patent Classification (CPC):
**G01N 27/302**

(86) International application number:
**PCT/IB2012/057695**

(87) International publication number:
**WO 2013/093899 (27.06.2013 Gazette 2013/26)**

(54) **ELECTROCHEMICAL SENSOR FOR PH MEASUREMENT**

ELEKTROCHEMISCHER SENSOR ZUR PH-MESSUNG

DÉTECTEUR ÉLECTROCHIMIQUE DESTINÉ À UNE MESURE DE PH

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011 GB 201122292**
**04.05.2012 GB 201207906**

(43) Date of publication of application:
**12.11.2014 Bulletin 2014/46**

(73) Proprietors:
- **Schlumberger Technology B.V.**
  **2514 JG The Hague (NL)**
  Designated Contracting States:
  **AL AT BG CH CY CZ DE DK GR HR HU IE IT LI LT NO PL RO SI SK TR**
- **Schlumberger Holdings Limited**
  **Road Town, Tortola 1110 (VG)**
  Designated Contracting States:
  **GB NL**
- **Services Pétroliers Schlumberger**
  **75007 Paris (FR)**
  Designated Contracting States:
  **FR**
- **Prad Research And Development Limited**
  **Tortola 1110 (VG)**
  Designated Contracting States:
  **BE EE ES FI IS LU LV MC MK MT PT RS SE SM**

(72) Inventors:
- **LAWRENCE, Nathan**
  **Cambridge**
  **Cambridgeshire CB3 0EL (GB)**
- **MEREDITH, Andrew**
  **Cambridge**
  **Cambridgeshire CB3 0EL (GB)**

(74) Representative: **Schlumberger Intellectual Property Department**
**Parkstraat 83**
**2514 JG Den Haag (NL)**

(56) References cited:
**EP-A2- 0 218 530** **WO-A1-2010/001082**
**US-A1- 2011 048 969**

- **HEIKE KAHLERT: "Functionalized carbon electrodes for pH determination", JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 12, no. 10, 13 June 2008 (2008-06-13), pages 1255 - 1266, XP019593286, ISSN: 1433-0768**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Background

There are numerous circumstances in which it is desirable to detect, measure or monitor a constituent of a fluid. One of the commonest requirements is to determine hydrogen ion concentration (generally expressed on the logarithmic pH scale) in aqueous fluids which may for example be a water supply, a composition in the course of production or an effluent. The determination of the pH of a solution is one of the most common analytical measurements and can be regarded as the most critical parameter in water chemistry. Merely by way of example, pH measurement is important in the pharmaceutical industry, the food and beverage industry, the treatment and management of water and waste, chemical and biological research, hydrocarbon production and water supply monitoring. Nearly all water samples will have their pH tested at some stage during their handling as many chemical processes are dependent on pH.

It may also be desired to measure pH of a fluid downhole in a wellbore. The concentrations of some chemical species, including $H^+$, may change significantly while tripping to the surface. The change occurs mainly due to a difference in temperature and pressure between downhole and surface environment. In case of samples taken downhole, this change may also happen due to degassing of a sample (seal failure), mineral precipitation in a sampling bottle, and chemical reaction with the sampling chamber. The value of pH is among the parameters for corrosion and scale assessment. Consequently it is of considerable importance to determine pH downhole.

One approach to pH measurements, both at the Earth's surface and downhole, employs a solid-state probe utilising redox chemistries at the surface of an electrode. Some redox active compounds (sometimes referred to as redox active species) display a redox potential which is dependent on hydrogen ion concentration in the electrolyte. By monitoring this redox potential electrochemically, pH can be determined. Voltammetry has been used as a desirable and convenient electrochemical method for monitoring the oxidation and reduction of a redox active species and it is known to immobilise the redox active species on or in proximity to an electrode.

Prior literature in this field has included WO2005/066618 which disclosed a sensor in which two different pH sensitive molecular redox systems and a pH insensitive ferrocene reference were attached to the same substrate. One pH sensitive redox system was anthraquinone (AQ) and the second was either phenanthrenequinone (PAQ) or alternatively was N,N'-diphenyl-p-phenylenediamine (DPPD). WO2007/034131 disclosed a sensor with two redox systems incorporated into a copolymer. WO2010/001082 disclosed a sensor in which two different pH sensitive molecular redox systems were incorporated into a single small molecule which was immobilized on an electrode. WO2010/111531 described a pH metering device using a working electrode in which a material which is sensitive to hydrogen ions (the analyte) chemically coupled to carbon and immobilised on the working electrode.

In an electrochemical cell, the electromotive force (e.m.f.) of the cell is related to the concentration of an ion i by the Nernst equation which takes the form

$$[1] \qquad E = E^0 + (k*T)*\log(a_i)$$

where E is the measured electromotive force (e.m.f.) of the cell (all potentials are in volts), $a_i$ corresponds to the activity of the ion i , and $E^0$ is the standard potential (at temperature T) corresponding to the potential in a solution with the activity of ion i equal to one. The slope of a plot of E as a function of $\log(a_i)$ together with the cell (electrode) constant ($E^0$) may be experimentally determined in a calibration procedure using standard solutions with known activities of ion *i*. For good quality undamaged electrodes this slope should be very close to the theoretical one, equal to ($R*T/F*z_i$), where F is the Faraday constant (23061 cal/mole), R is the gas constant (1.9872 cal/mole K) and $z_i$ is the charge of ion i. At low concentrations the concentration of an ion is a good approximation to its activity and concentration can be used in the above equation.

The Nernst equation [1] can be rewritten for pH sensors, i.e. log $a(H^+)$ as

$$[2] \qquad E_{0.5} = K - (2.303\ RTm/nF)*pH$$

where $E_{0.5}$ is the half-wave potential of the redox system involved, K is an arbitrary constant, R is the ideal gas constant, m is the number of protons and n is the number of electrons transferred in the redox reaction.

For practical purposes the key point is that observed potential of an electrochemical cell in which a redox active compound undergoes a redox reaction involving electron and proton transfer is proportional to pH if other factors remain constant. Calibration of an electrochemical sensor can be carried out using standard buffer solutions.

An issue with electrochemical sensors (particularly those involving detection mechanisms involving proton transfer) is the ability to make electrochemical measurements when there is no buffer and/or similar species that can facilitate proton transfer reactions. Measurements can be particularly difficult, and error prone, in low ionic strength media,

without pH buffering species present in the aqueous liquid being examined, which is of course the electrolyte in contact with the sensor. Measuring the pH of rainwater, and natural waters with very low mineralization, is noted as being particularly difficult.

Merely by way of example, in water industries, such as the management of reservoirs and waste management, the samples being tested or the reservoirs being monitored may not include a buffer solution or the like. Even in non-water industries, there may be occasions when the samples being tested or the fluid being monitored have low amounts of "natural buffers".

A pH sensor is often tested and calibrated using buffer solutions which have stable values of pH. The concentration of buffer in such a solution may be 0.1 molar or more. It has been discovered that electrochemical sensors utilising an immobilized redox compound can give good results when used in a buffered aqueous solution, and yet fail to do so when used in an unbuffered solution. A number of authors have appreciated this and it has been proposed that the electrochemistry of quinones in unbuffered, near neutral solution differs from that observed in buffered or strongly acid solution. See for example Quan et al, J. Am.Chem.Soc. vol 129, pages 12847 to 12856 (2007). Quan et al argue that a different mechanism becomes operative in aqueous solution when proton concentration becomes low. Batchelor-McAuley et al "Voltammetric Responses of Surface-Bound and Solution-Phase Anthraquinone Moieties in the Presence of Unbuffered Aqueous Media" J. Phys. Chem. C vol 115 pages 714-718 (2011) attribute this phenomenon of different behaviour in unbuffered solution to depletion of $H^+$ ion concentration in the vicinity of the electrode resulting in a significant local change in pH adjacent to the electrode and thus an erroneous determination of pH within the bulk solution. In unpublished work we have tried to overcome this by use of a rotating electrode to change the mass transport regime in the vicinity of the electrode, but without appreciable success.

Other approaches to pH measurement include amperometric and potentiometric methods. Oyama et al, in "Hydrogen Ion Selective Microelectrode Prepared by Modifying an Electrode with Polymers" Anal. Chem. Vol 59, pages 258 to 262 (1987) describes a potentiometric method in which an electrode is connected to the gate of a field effect transistor. This paper reported experiments with coatings on an electrode in which a coating made the electrode selective for hydrogen ions when the electrolyte contained $Fe^{2+}$ or $Fe^{3+}$ ions. EP0218530 discloses an amperometric sensor in which current flow at a constant applied potential is proportional to ion concentration. This document calls for an electrode to carry a layer which is selectively permeable to hydrogen ions so that the current measured for the amperometric determination of pH is proportional to concentration of hydrogen ions only. In contrast WO2005/066618 mentioned above includes experiments in which a voltammetric method was able to determine potential proportional to hydrogen ion concentration when other ions were present in buffered solution.

## Summary

This summary is provided to introduce a selection of concepts that are further described below. This summary is not intended to be used as an aid in limiting the scope of the subject matter claimed.

We have found that anomalous values of pH can be obtained from an electrochemical sensor when there is no buffer in the electrolyte (the aqueous liquid whose pH is being measured) and also when buffer is present in the electrolyte at low concentration. We have also found that anomalous indication of pH by an electrode can be mitigated with a covering over the redox active compounds(s). In a first aspect (not part of the invention as claimed), the present disclosure provides an electrode comprising a substrate, at least one redox active compound on the substrate which is able, in contact with aqueous solution, to undergo a redox reaction involving both electron and proton transfer and a covering layer over the redox active compound wherein the covering layer selectively allows the passage of hydrogen ions but not other atoms to the redox active compound.

The covering layer displays selectivity for hydrogen ions allowing the passage of hydrogen ions but not other atoms. In some examples, transfer of hydrogen ions through the covering layer enables transfer of hydrogen ions by exchange of hydrogen atoms along a sequence of groups connected by hydrogen bonds.

A second aspect of the present disclosure provides a method of determining the concentration of an analyte which is hydrogen ions using an electrode as above. The method of determining the pH of an aqueous liquid according to the invention is defined in claim 1. The method is applicable to measurement of the pH of aqueous liquids where the liquid is unbuffered or where it may possibly contain pH-buffering partially dissociated acid, base and/or salt at a concentration up to 0.01Molar (i.e. does not exceed 10 milliMolar). The method comprises contacting the liquid with an electrode with at least one redox active compound thereon, the redox active compound being convertible electrochemically between reduced and oxidized forms with transfer of at least one proton between the compound and the aqueous liquid, applying varying potential to the electrode, observing current flow as potential is varied, determining the applied potential at a maximum current for redox reaction of the compound and determining pH from potential at maximum current, wherein the electrode has a covering layer which separates the redox active compound from the aqueous liquid and wherein the covering layer allows the passage of hydrogen ions but not other atoms between the redox active compound and the aqueous liquid. The presence of the covering layer enhances accuracy of the measurement of pH of the aqueous liquid. Performing the method

in the same manner, but without the covering layer would lead to an inaccurate determination of pH. When the covering layer is present the measurement of pH becomes more accurate.

Concentration of buffer is the total concentration of partially dissociated acid, base and/or salt which provides the stabilisation of pH. The method and/or the use of a sensor may be carried out to measure the pH of an aqueous liquid which contains buffer at a concentration of at least $10^{-6}$ molar (0.001 mM) or possibly at least $5 \times 10^{-6}$ molar (0.005 mM), or at least $10^{-5}$ molar or at least $10^{-4}$ molar. The concentration of buffer may perhaps be no more than $5 \times 10^{-3}$ molar (5 mM).

Because measurement can be made when buffer is at a low concentration, measurement can be performed on aqueous liquids where a small concentration of buffer may be present as a consequence of the origin of the liquid, for example measurement may be carried out on biological samples and natural products containing small concentrations of organic acids which are not fully ionised and provide some buffering of pH.

It is envisaged that the aqueous liquid may have a pH which is within two or three units of neutral. Thus the liquid may be mildly acidic from pH 4 or pH 5 up to pH 7 or mildly basic from pH 7 up to pH 9 or pH 10. The aqueous liquid may be liquid flowing within or sampled from equipment for processing the liquid and it may be a foodstuff or other material for human or animal consumption or an ingredient of such foodstuff or material. The aqueous liquid may be one phase of a composition which is an emulsion, and it may be the continuous phase or a discontinuous phase of an emulsion.

Measurement of pH by the stated method can be carried out without measuring the buffer concentration. It is advantageous that the method can be employed when buffer concentration in the aqueous liquid is not known or is a parameter which cannot be controlled, without fear of an anomalous result because the concentration of buffer is low.

Application of potential to the electrode and observation of current flow is a voltammetric procedure in which the current flow is observed while the potential applied to the electrode is varied over a range and the applied potential at which current flow is a maximum (the peak of a so-called voltammetric wave) is determined. This electrochemical parameter of potential at peak current is then an intermediate result used for determination of pH.

In a further aspect (not part of the invention as claimed) the present disclosure provides apparatus to determine pH of water or other aqueous solution. Such apparatus may comprise an electrochemical sensor comprising a redox active compound immobilized to an electrode and having at least one functional group convertible electrochemically between reduced and oxidized forms with transfer of at least one proton between the compound and surrounding aqueous phase, means to apply potential to the electrode and observe current flow, and a programmable computer connected and configured to receive current and/or voltage data from the sensor, wherein (as already mentioned above) the electrode has a covering layer over the redox active compound and this covering layer separates the redox active compound from the aqueous liquid but selectively allows the passage of hydrogen ions but not other atoms between the redox active compound and the aqueous liquid.

In some examples the covering layer has composition which enables transfer of hydrogen ions through the covering layer by exchange of hydrogen atoms along a sequence of groups connected by hydrogen bonds.

Such apparatus may be incorporated in equipment to process aqueous liquid, for instance process plant for water treatment, or to manufacture a pharmaceutical or a food product, and the computer which receives data from the sensor may be a computer which monitors or controls operation of that equipment. Thus this disclosure also provides equipment (not forming part of the invention as claimed) for processing water or other aqueous liquid, including:

a programmable computer operatively connected to control or monitor operation of the equipment,
an electrochemical sensor comprising a redox active compound immobilized to an electrode and having at least one functional group convertible electrochemically between reduced and oxidized forms with transfer of at least one proton between the compound and surrounding aqueous phase, wherein the electrode has a covering layer over the redox active compound and the covering layer allows the passage of hydrogen ions to the redox active compound, which may take place by exchange of hydrogen atoms along a sequence of groups connected by hydrogen bonds, and means to apply variable potential to the electrode and observe current flow; wherein the computer is connected and configured to receive current and/or voltage data from the sensor, to determine the applied potential at a maximum current for the oxidation and reduction of the compound and to determine pH of the aqueous liquid from the potential at maximum current for redox reaction of the compound.

The electrochemical sensor may be positioned in equipment so as to be exposed to liquid flowing within the equipment, or taken from it as a sample, possibly by automated sampling under control of the computer. A programmable computer may monitor the proper operation of equipment and give a readout to a human operator, or the computer may itself control operation of the equipment.

The liquid whose pH is measured by such apparatus and equipment may be unbuffered, or may contain buffer in a concentration up to or above 0.1 molar. Incorporating an electrochemical sensor as defined mitigates the risk of anomalous determinations of pH in the event that the buffer concentration is low.

An electrochemical sensor may also comprise a second redox active compound as a reference, immobilized to the same or another electrode, where the oxidation and reduction of the reference redox active compound is substantially

insensitive to pH.

In yet another aspect (not part of the invention as claimed) the subject matter disclosed by this application provides use of an electrode which comprises a redox active compound with a covering layer over the redox active compound wherein the covering layer allows the passage of hydrogen ions but not other atoms to the redox active compound (as stated above) for the determination of the pH of aqueous liquid containing a low concentration of buffer.

**Brief description of the Drawings**

Fig 1 shows the result of square wave voltammetry of PAQ in buffered and unbuffered solution, and is discussed in Comparative Example 1:

Fig 2 shows voltages at the current peaks in Fig 1 plotted against pH;

Fig. 3 shows voltages at current peaks obtained in Comparative Example 2 plotted against minus log buffer concentration:

Fig 4 is a cross section of an electrode with material deposited thereon, as used in the Examples:

Fig 5 show the results of voltammetry in Example 1:

Fig 6 shows a plot of potential pH, obtained in Example 2;

Fig 7 shows another possible electrode construction;

Fig. 8 is a diagrammatic illustration of a cable-suspended tool for testing water; and

Fig 9 is a diagrammatic view of a flow line with means for taking sample and measuring the pH of the samples.

**Detailed description**

An electrode according to the present disclosure has a substrate. This may be a conductive substrate and it may be metallic or may be a conductive from of carbon. Forms of carbonwhich have used in electrodes include glassy carbon, carbon fibres, carbon black, varoius forms of graphite, carbon paste and carbon epoxy. One further form of carbon which has seen a large expansion in its use in the fileld of electrochemistry since its discovery in 1991 is the carbon nanotube (CNT). The structure of CNTs approximates to rolled-up sheets of graphite and can be formed as either single or multi-walled tubes. Single-walled carbone nanotubes (SWCNTs) constitute a single, hollow graphite tube. <ulti-walled carbon nanotubes (SWCNTs) on the other hand consist of severa; concentric tubes fitted one inside the other. If the conductive carbon is in a particulate formm it may be immobilized on another material, which may itself be a form of carbon or may be another material.

An insulting substrate may be used, if a conductive pathway to the redox active material is provided, possibly through conductive material mixed with the redux active compound so that s a conductive mixture is deposited on an insulting substrate.

A considerable number of compounds are known which undergo redox reaction involving the transfer of both electrons and protons. Redox active compounds which have been proposed for use in pH sensors include aromatic quinones, which have been mentioned in various documents including WO2005/066618 and which undergo a two electron two proton redox reaction. Aromatc nitroso compounds which undergo a one electron one proton reaction have also been proposed, as for instance exemplified in WQ2010/106404. Quinones used as redox active compounds in embodiments of this invention may have condensed aromatic ring systems, as for example napthoquinone, anthraquinone and phenanthrenequinone (also referred to as phenanquinone). The latter two are illustrated below:

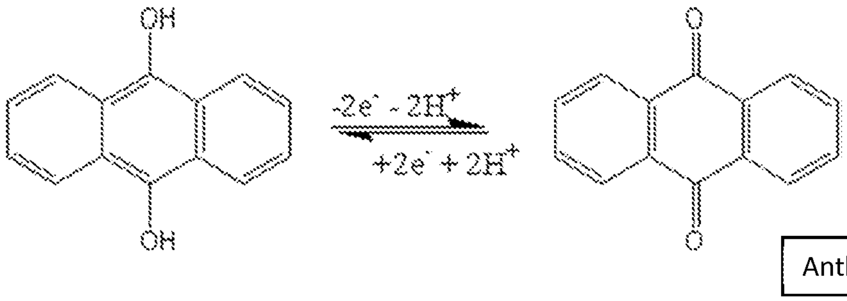


Anthraquinone

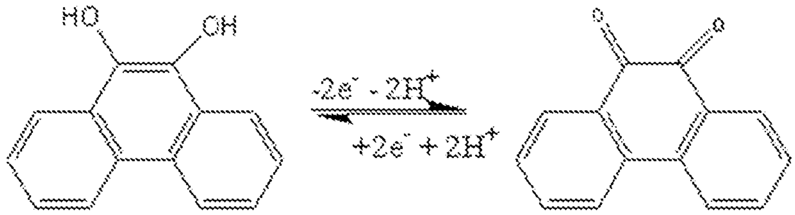


Phenanthrenequinone

A redox active compound may be deposited on a conductive substrate by evaporation of a slution, or may be immobilised by chemical attachment, in particular by chemical attachment to carbon. This is reffered to as "derivitising" the carbon. A versatile method for derivitising carbon is the chemical reduction of a redox activecompound covalently attached to a diazonium group, using hipophosphorous acid as the reducing agent. Derivitisation of carbon may also be carried out using a very strong base to convert a precursor to a reactive carbene which then forms covalant bonds to a carbon surface, as described in WO2010/106404.

In further examples disclosed herein, a redox active compound which is sensitive to the analyte concentration/pH may be screen printed onto a substrate which may be an insulting material. The redox active species may be combined with a binding material, which may be a conductive binding material such as a graphite-containing ink, and then screen printed onto the substrate

In the present invention the redox active compound(s) on the substrate are covered with a layer of material which allows hydrogen atoms to pass through the covering layer to the redox active compound.

The material may allow transfer of hydrogen ions through the material by exchange of hydrogen atoms along a sequence of groups in the material which are connected together by hydrogen bonds. A mechanism for the transfer of hydrogen atoms through water by transfer of hydrogen atoms from one more water molecule to another was proposed as early as 1806 by Grotthuss. Such a mechanism was also suggested by Nagle and Morowitz in "Molecular mechanisms for proton transport in membranes" Proc. Natl. Acad. Sci. USA Vol75 pp298-302 (1978) as a mechanism for proton transfer along a chain of organic molecules with hydroxy groups linked by hydrogen bonds in the microbiology context of a transmembrane protein providing a pathway for transfer of hydrogen ions through a biological membrane.

As is explained by Nagle and Morowitz, the transfer of hydrogen ions by this mechanism entails a chain of transfers of hydrogen atoms from one group to an adjacent group with covalent bonds being formed in place of hydrogen bonds and formation of hydrogen bonds between atoms previously connected by covalent bonds, as shown below:

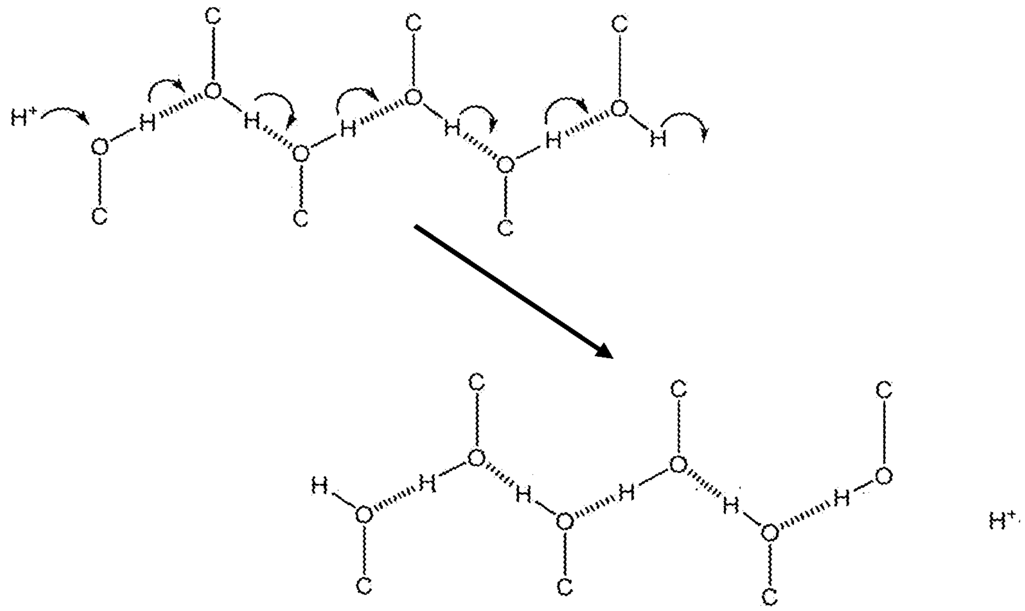

The covering layer may comprise one or more compounds incorporating a least one group which is able to participate in hydrogen bonding. Such groups contain both a hydrogen and an oxygen or nitrogen atom, the common examples being hydroxyl, amino and amido groups.

The concentration and/or positioning of such groups may provide pathways for hydrogen atom transfer from one such group to another. The chain of connected groups may include water molecules included within the covering layer and hydrogen bonded to organic molecules. This covering layer of material over the redox active compounds may have properties of selectivity, because hydrogen ions transfer through it by an exchange process whereas other atoms cannot do so.

The molecules of the covering layer may also form hydrogen bonds to the redox active compound under the covering layer and this may have the effect of reducing the activation energy for proton transfer to form intermediates which have a transient existence in the oxidation or reduction reaction.

This cover layer may be formed from one or more water- insoluble compounds which maybe organic compounds. The covering layer may also be formed from organic compounds having some water solubility. Such compounds may or may not be polymeric. One possibility is polyvinyl alcohol, which is normally made by hydrolysis of polyvinyl acetate and has the theoretical formula

$$[-CH_2-CHOH-]_n$$

but if hydrolysis is incomplete, the polymer will be a copolymer containing both

$$[-CH_2-CHOH-] \text{ and } [-CH_2-CHOAc-]$$

Polyvinyl alcohol forms a film when an aqueous solution of it is evaporated. It remains water soluble, but dissolution when exposed to water is fairly slow.

Another category of materials which may be used for a covering layer are material with a polar portion attached to a non-polar portion. Such materials may be surfactants, and these may be nonionic surfactants with low water solubility. These may have a hydrophobic alkyl or alkenyl group as the non-polar portion, and may be ethoxylated alcohols with an HLB value of 10 or less. Another category of materials with a polar head group and a hydrophobic tail is lipids which are naturally occurring materials with hydroxyl and/or phosphate groups in the polar head and one or more alkyl or alkenyl groups in the tail. Lipids with phosphate in the head are generally termed phospholipids.

In some embodiments, a polymer coating which is permeable to water may be applied on top of the covering layer already mentioned. A permeable polymer coating may prevent or reduce loss of a somewhat water soluble cover layer from the electrode and it may also prevent loss of redox active compound(s). A possible material for a water-permeable polymer layer is a polysulphone.

The invention will now be further explained with reference to the following examples:

**Comparative Example 1**

For this example the test electrode had phenanthraquinone (PAQ) deposited on it by evaporation of a solution of PAQ in dichloromethane. A pH insensitive electrode was prepared in the same way, using ferrocene as the redox compound. This electrode and the test electrode were electrically connected. Fig 1 shows as continuous curves the oxidative responses obtained by square wave voltammetry in pH 4, pH 7 and pH 9 buffers. The voltages at oxidative peak currents were plotted against pH as shown as Fig 2. The data points obtained in buffer solutions lie on an obvious straight line which serves as a calibration for measuring the pH of other solutions.

Fig 1 also shows (as a dotted line) the voltammetric response when the electrolyte was unbuffered 0.1 molar sodium chloride solution at pH 7. The oxidative peak current was at an anomalous low voltage, erroneously indicating a pH above 10. This anomalous data point is shown circled in Fig 2. This anomaly is also observed with anthraquinone (AQ) and other redox active molecules and has been reported by the Batchelor McAuley et al paper mentioned earlier.

**Comparative Example 2**

For this example the test electrode had anthraquinone (AQ) deposited on it in the manner described above. Voltammetry was carried out in aqueous solutions containing buffer at low concentration. Three buffers were used:

A phosphate buffer contained $Na_2HPO_4$ and $KH_2PO_4$ in proportions to buffer the solution to pH7.0 as determined using a glass electrode. The molar concentration of buffer was the total molar concentration of all phosphate ions. A phthalate buffer contained potassium hydrogen phthalate with pH adjusted by addition of hydrochloric acid to pH4.0 as determined using a glass electrode. Buffer concentration was the total concentration of phthalate. A borate buffer contained boric acid and sodium tetraborate in proportions to buffer at pH9.0 as determined using a glass electrode. Buffer concentrations was the total molar concentration of all borate ions.

Square wave voltammetry was carried out in solutions containing these buffers at a variety of concentrations ranging from 0.0001 molar to 0.1 molar, together with potassium chloride where required to make up the electrolyte concentration to 0.1 Molar. The voltages corresponding to peak oxidative current were measured, and the results are set out in the following table.

| Buffer(molar) | minus log Buffer conc. | phthalate | phosphate | borate |
|---|---|---|---|---|
| 0.1 | 1 | -0.34 | -0.51 | -0.66 |
| 0.01 | 2 | -0.35 | -0.52 | -0.66 |
| 0.005 | 2.30 | -0.36 | -0.53 | -0.66 |
| 0.003 | 2.52 | -0.37 | -0.55 | -0.66 |
| 0.001 | 3 | -0.44 | -0.70 | -0.67 |
| 0.0001 | 4 | -0.73 | -0.73 | -0.73 |

It can be seen that the values of peak current measured in $10^{-4}$ molar (0.1 millimolar) buffer differ from those in 0.1 molar buffer and in the case of phosphate and phthalate buffers the value at somewhat higher buffer concentrations also differ from the values in 0.1 molar buffer.

**Example 1**

The end portion of a glassy carbon electrode used in this example is shown in diagrammatic cross section in Fig 4. It had a glassy carbon rod 10 in a tubular holder 12 exposing a circular end face 14 which is 3 mm in diameter. Anthraquinone was dissolved in dichloromethane at a concentration of 1 mg/ml and a 20 microlitre droplet of this solution was placed on exposed surface 14 of the carbon electrode. The solution was allowed to evaporate thus depositing anthraquinone on the electrode surface, as indicated diagrammatically at 16.

Polyvinyl alcohol, 80% hydrolysed, was dissolved in water at a concentration of 1 mg/ml and a 20 microlitre droplet was placed on the electrode surface. The water was allowed to evaporate and the electrode was then dried in an oven at 130°C. This procedure deposited a covering layer 18 of polyvinyl alcohol over the anthraquinone 16.

The electrode was used as the working electrode for cyclic voltammetry using 0.1M sodium chloride in water as the electrolyte. This electrolyte was at neutral pH and contained no buffer. The voltammetry was carried out using a standard three electrode set up, with a standard calomel electrode as reference and a stainless steel rod as counter electrode. A potentiostat was used to cycle the applied potential over a range and record the current flow.

This experiment was then repeated, with the modification that after applying one drop of the polyvinyl alcohol solution and drying it a second drop was applied in the same way so as to increase the thickness of the covering layer. Voltammetry was then carried out as before.

In further repeats, the number of drops of polyvinyl alcohol which were applied and dried was progressively increased. The results of voltammetry are shown in Fig 5. An electrode with deposited anthrquinone but no polyvinyl alcohol was also examined in this way and its voltammetric response is indicated by a broken line in Fig 5.

Without any covering layer of polyvinyl alcohol, the peak of the voltammetric wave was at a potential corresponding to an anomalous value of pH, above the true pH 7. As the number of droplets of polyvinyl alcohol used to form the covering layer was increased the potential of the peak current, i.e the peak of the voltammetric wave, progressively shifted towards a higher value as indicated by the arrow in Fig 5, thus corresponding to a less anomalous indication of pH.

**Example 2**

This example used a nonionic surfactant of low water solubility. This was dodecyl ethoxylate of the formula $C_{12}H_{25}(OCH_2CH_2)_nOH$ where n has an average value of 4. This surfactant was available commercially under the trade name Brij30.

Anthraquinone was deposited on an electrode surface as in Example 1. Brij30 was dissolved in water at a concentration of 1mg/ml and degassed with a flow of nitrogen to remove any trapped oxygen. A 20 microlitre droplet was placed on the electrode surface. The water was allowed to evaporate under nitrogen and the electrode was then dried in an oven at 130°C. This procedure deposited a covering layer of Brij30 over the anthraquinone.

Electrodes made as above were used as the working electrode for cyclic voltammetry, using reference electrode, counter electrode and potentiostat as in Example 1. Voltammetry was conducted in three types of buffer solutions and results are shown in Fig 6: in standard IUPAC buffers (points shown by open squares), in Britton-Robinson buffer with successive KOH additions (points shown as open diamonds) and in 0.1 molar phosphate buffer solutions prepared at various values of pH (shown as grey triangles). The peak of the voltammetric wave was determined for each electrolyte and the results are shown as a graph in Fig 6 as the potential at peak current plotted against pH. The plots obtained by this calibration procedure were consistent for the three types of buffers, indicating the behaviour was repeatable and reliable in various buffered media. Two domains were observed with slopes -0.0427 V/pH and -0.0852 V/pH respectively. According to the Nernst equation, this would correspond to a ($3e^-$, $2H^+$) and ($3e^-$, $4H^+$) process respectively, suggesting the system did not follow the simple Nernstian linear slope of a ($2e^-$, $2H^+$) transfer.

When voltammetry was carried out with unbuffered 0.1M potassium chloride solution as electrolyte, the pH determined by means of the calibration plots from the observed potential at peak current (shown as a solid black square in Fig 6), was very close to the pH determined using a standard glass electrode (shown as a solid black triangle).

**Example 3**

Using the same procedure as in Example 2, phenanthrenequinone (PAQ) was deposited on an electrode by evaporation from solution in dichloromethane, and then a covering layer of lecithin which is a phospholipid was applied over it. A comparative electrode had deposited PAQ but no covering layer. The electrodes was used to carry out voltammetry with unbuffered water having a pH of 7.4 as determined using a standard glass electrode. as electrolyte. The pH values obtained using the electrodes of this example were

PAQ alone: 10.3
PAQ with lecithin cover layer: 8.7

Thus the anomalous indication of pH was reduced by the lecithin cover layer.

Fig 7 shows another possible electrode construction. An insulating substrate 45 is used. A conductive paste containing graphite and a pH sensitive redox compound is printed on one area 46 of the insulating substrate 45. A second conductive paste containing a pH insensitive ferrocene compound is printed on an area 47 as a reference electrode and both areas 46 ,47 are connected together and to a control unit which may be a potentiostat by conductive tracks 48 on the substrate. A covering layer indicated by its boundary 49 is applied over the area 46; this consists of one or more materials which allow transfer of hydrogen ions through the material by exchange of hydrogen atoms along a sequence of groups in the material which are connected together by hydrogen bonds. Optionally the entire substrate with deposited materials thereon is finally covered with a water-permeable polymer.

An application of the electrochemical sensor may be in the monitoring of underground bodies of water for the purposes of resource management. One or more sensorsmay be incorporated in a tool deployed on a cable from the surface within a monitoring well drilled into an aquifer - either for short duration (as part of a logging operation) or longer term (as part of a monitoring application). The deployment of such a pH sensor within producing wells on a cable may

provide information on produced water quality. Also, the pH sensor may be deployed in injection wells, *e.g.* when water is injected into an aquifer for later retrieval, where pH may be used to monitor the quality of the water being injected or retrieved.

Fig 8 illustrates a tool for investigating subterranean water. This tool has a cylindrical body 72 which is suspended from a cable 73. A pump 74 is accommodated within the body 72 and can be operated to draw subterranean water into a sampling chamber 76 in which there is a pH sensing electrode 78 such as that shown in Fig 7. The tool also encloses also encloses a unit 62 which is a potentiostat for supplying voltage to the electrode 78, measuring the current which flows and transmitting the results to the surface.

Another application of embodiments of the present invention may be in the monitoring of water within a well penetrating a hydrocarbon reservoir. One or more sensors, which may for instance be such as shown in Fig 7, may be incorporated into a wireline tool, a measuring while drilling tool or a logging while drilling tool.

While the preceding uses of the electrochemical sensor are in the hydrocarbon and water industries, the examples disclosed may provide an electrochemical sensor for pH in research laboratories and in a wide range of industries, including food processing, pharmaceutical, medical, water management and treatment and biochemistry.

The electrochemical sensor may for instance be positioned in a flow line where it is exposed to a liquid whose pH is to be measured, or may be positioned to be exposed to liquid taken as a sample, for instance taken by an automated sampling procedure.

Fig 9 shows diagrammatically an arrangement for periodically taking samples and determining pH. An aqueous liquid to be sampled flows in line 53 as shown by arrows 55. A sampling tube 57 projects into the flow path. When a sample is to be taken, valve 58 is opened, allowing liquid to flow through the tube 57 into chamber 59. This chamber 59 has a sensor 60 within it for measuring the pH of fluid within the chamber 59. This sensor may be of the types shown in Fig 7 and is connected to a potentiostat 62. The line 53 is part of equipment 56 for processing water or other aqueous liquid. This plant is controlled by a programmable computer 63 which also operates the valve 58 when required and a further valve 64 for draining the chamber 59 through tube 65. Connections to the computer 63 are shown by broken lines. The computer may be programmed to maintain stable pH, so that pH measurement forms part of a control system, or it may monitor pH and alert a human supervisor if pH goes out of an acceptable range. The latter might be done as a check on incoming water or other aqueous feedstock, for instance.

It will be appreciated that the example embodiments described in detail above can be modified and varied within the scope of the invention disclosed and claimed herein. Features referred to above or shown in individual embodiments above may be used together in any combination as well as those which have been shown and described specifically, within the scope of the appended claims.

## Claims

**1.** A method of determining the pH of an aqueous liquid, the method comprising

contacting the liquid with an electrode (46, 47, 78) comprising a substrate with at least one redox active compound immobilized thereon, the redox active compound comprising at least one functional group convertible electrochemically between reduced and oxidized forms with transfer of at least one proton between the compound and the aqueous liquid,
applying varying potential to the electrode,
observing current flow as potential is varied,
determining the applied potential at a maximum current for redox reaction of the compound, and
determining pH from the potential at maximum current,
**characterised in that** the method is a method of determining the pH of an aqueous liquid which does not contain more than 0.01 moles per litre of pH-buffering partially dissociated acid, base and/or salt and **in that** the electrode has a covering layer (18, 49) which separates the redox active compound from the aqueous liquid, wherein the covering layer (18, 49) selectively allows the passage of hydrogen ions but not other atoms between the redox active compound and the aqueous liquid.

**2.** A method according to claim 1 wherein the aqueous liquid contains from $10^{-6}$ to 0.01 moles per litre of pH-buffering partially dissociated acid, base and/or salt.

**3.** A method according to claim 1 or claim 2

wherein the covering layer (18,49) enables
transfer of hydrogen ions through the covering layer by exchange of hydrogen atoms along a sequence of groups

connected by hydrogen bonds.

4. A method according to any one of the preceding claims wherein the redox active compound(s) comprise an aromatic quinone.

5. A method according to any one of the preceding claims wherein the covering layer comprises a polymer containing groups which form hydrogen bonds.

6. A method according to any one of the preceding claims wherein the covering layer comprises one or more materials which have a polar head group connected to a hydrophobic tail.

7. A method according to any one of claims 1 to 5 wherein the covering layer comprises one or more surfactants or lipids.

8. A method according to any one of the preceding claims wherein the electrode comprises a water-permeable further layer over the covering layer.

**Patentansprüche**

1. Ein Verfahren zum Bestimmen des pH-Werts einer wässrigen Flüssigkeit, wobei das Verfahren Folgendes umfasst:

   Inkontaktbringen der Flüssigkeit mit einer Elektrode (46, 47, 78), die ein Substrat mit mindestens einer darauf immobilisierten redoxaktiven Verbindung umfasst, wobei die redoxaktive Verbindung mindestens eine Funktionsgruppe umfasst, die elektrochemisch durch Übertragen von mindestens einem Proton zwischen der Verbindung und der wässrigen Flüssigkeit von reduzierten zu oxidierten Formen konvertierbar ist,
   Anlegen von variierendem Potenzial an die
   Elektrode, Beobachten der Stromstärke bei
   variierendem Potenzial,
   Bestimmen des angelegten Potenzials bei einer maximalen Stromstärke für die Redoxreaktion der Verbindung, und
   Bestimmen des pH-Werts aus dem Potenzial bei maximaler Stromstärke,
   **dadurch gekennzeichnet, dass** das Verfahren ein Verfahren zum Bestimmen des pH-Wertes einer wässrigen Flüssigkeit ist, die nicht mehr als 0,01 Mol pro Liter pH-puffernde teilweise dissoziierte Säure, Base und/oder Salz enthält, und dass die Elektrode eine Deckschicht (18, 49) aufweist, die die redoxaktive Verbindung von der wässrigen Flüssigkeit trennt, wobei die Deckschicht (18, 49) selektiv den Durchgang von Wasserstoffionen, aber keiner anderen Atome zwischen der redoxaktiven Verbindung und der wässrigen Flüssigkeit ermöglicht.

2. Ein Verfahren nach Anspruch 1, wobei die wässrige Flüssigkeit $10^{-6}$ bis 0,01 Mol pro Liter pH-puffernde teilweise dissoziierte Säure, Base und/oder Salz enthält.

3. Ein Verfahren nach Anspruch 1 oder Anspruch 2, wobei die Deckschicht (18, 49) das Übertragen von Wasserstoffionen durch die Deckschicht durch den Austausch von Wasserstoffatomen entlang einer Sequenz von Gruppen, die durch Wasserstoffbrücken verbunden sind, ermöglicht.

4. Ein Verfahren nach einem der vorhergehenden Ansprüche, wobei die redoxaktive(n) Verbindung(en) ein aromatisches Quinon umfassen.

5. Ein Verfahren nach einem der vorhergehenden Ansprüche, wobei die Deckschicht ein Polymer umfasst, das Gruppen enthält, die Wasserstoffbrücken bilden.

6. Ein Verfahren nach einem der vorhergehenden Ansprüche, wobei die Deckschicht ein oder mehrere Materialien umfasst, die eine polare Kopfgruppe aufweisen, die mit einer hydrophoben Kette verbunden ist.

7. Ein Verfahren nach einem der Ansprüche 1 bis 5, wobei die Deckschicht ein oder mehrere Tenside oder Lipide umfasst.

8. Ein Verfahren nach einem der vorhergehenden Ansprüche, wobei die Elektrode eine wasserdurchlässige weitere Schicht über der Deckschicht umfasst.

## Revendications

1. Procédé de détermination du pH d'un liquide aqueux, le procédé comprenant :

   la mise en contact du liquide avec une électrode (46, 47, 78) comprenant un substrat comportant au moins un composé actif d'oxydoréduction immobilisé sur celui-ci, le composé actif d'oxydoréduction comprenant au moins un groupe fonctionnel convertible électrochimiquement entre des formes réduite et oxydée avec transfert d'au moins un proton entre le composé et le liquide aqueux,
   l'application d'un potentiel variable à l'électrode,
   l'observation du flux de courant lorsque le potentiel varie,
   la détermination du potentiel appliqué à un courant maximal pour la réaction d'oxydoréduction du composé, et la détermination du pH à partir du potentiel au courant maximal,
   **caractérisé en ce que** le procédé est un procédé de détermination du pH d'un liquide aqueux qui ne contient pas plus de 0,01 mole par litre d'acide, de base et/ou de sel partiellement dissocié tamponnant le pH et **en ce que** l'électrode présente une couche de recouvrement (18, 49) qui sépare le composé actif d'oxydoréduction du liquide aqueux, dans lequel la couche protectrice (18, 49) permet le passage d'ions hydrogène de manière sélective, mais pas celui des autres atomes entre le composé actif d'oxydoréduction et le liquide aqueux.

2. Procédé selon la revendication 1, dans lequel le liquide aqueux contient de $10^{-6}$ à 0,01 mole par litre d'acide, de base et/ou de sel partiellement dissociés tamponnant le pH.

3. Procédé selon la revendication 1 ou la revendication 2, dans lequel la couche protectrice (18, 49) permet le transfert d'ions hydrogène à travers la couche protectrice par échange d'atomes d'hydrogène le long d'une séquence de groupes reliés par des liaisons hydrogène.

4. Procédé selon l'une des revendications précédentes, dans lequel le ou les composés actifs d'oxydoréduction comprend une quinone aromatique :

5. Procédé selon l'une quelconque des revendications précédentes, dans lequel la couche protectrice comprend un polymère contenant des groupes qui forment des liaisons hydrogène.

6. Procédé selon l'une quelconque des revendications précédentes, dans lequel la couche protectrice comprend un ou plusieurs matériaux qui présentent un groupe de tête polaire relié à une queue hydrophobe.

7. Procédé selon une quelconque des revendications 1 à 5, dans lequel la couche protectrice comprend un ou plusieurs agents tensioactifs ou lipides.

8. Procédé selon l'une quelconque des revendications précédentes, dans lequel l'électrode comprend une couche supplémentaire perméable à l'eau sur la couche protectrice.

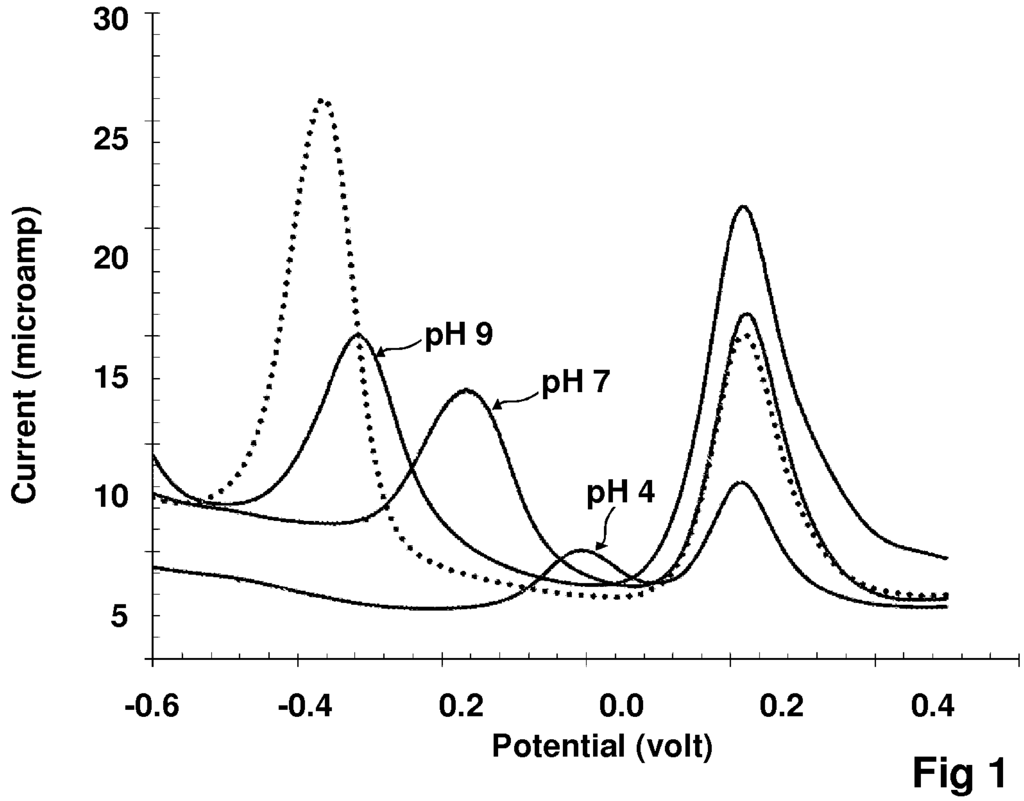
30
25
20
15
10
5
Current (microamp)
pH 9
pH 7
pH 4
-0.6
-0.4
0.2
0.0
0.2
0.4
Potential (volt)

Fig 1

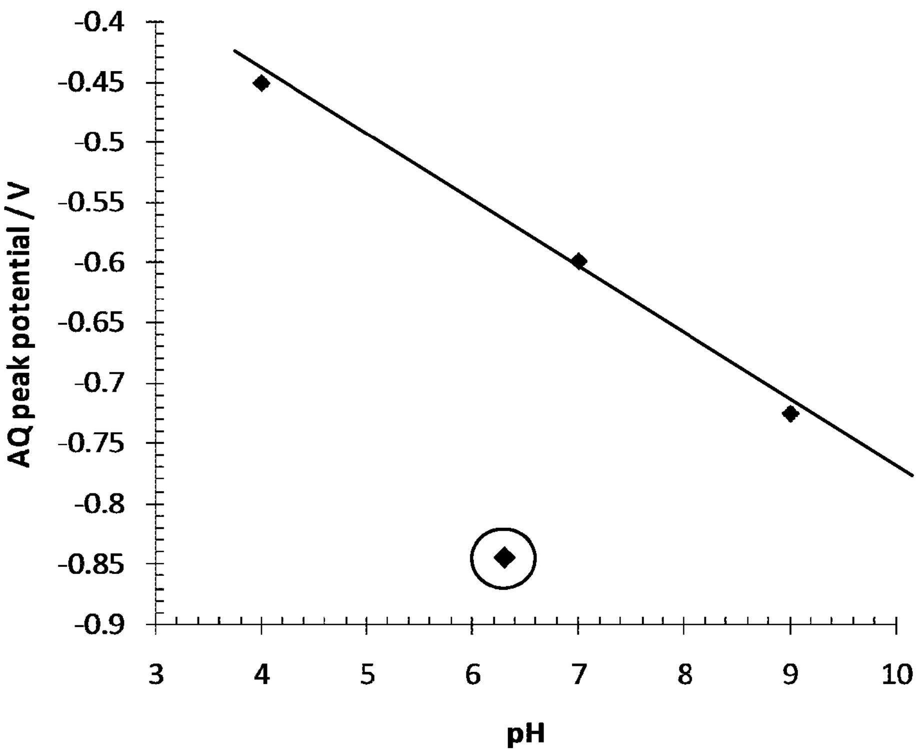
-0.4
-0.45
-0.5
-0.55
-0.6
-0.65
-0.7
-0.75
-0.8
-0.85
-0.9
AQ peak potential / V
3
4
5
6
7
8
9
10
pH

Fig 2

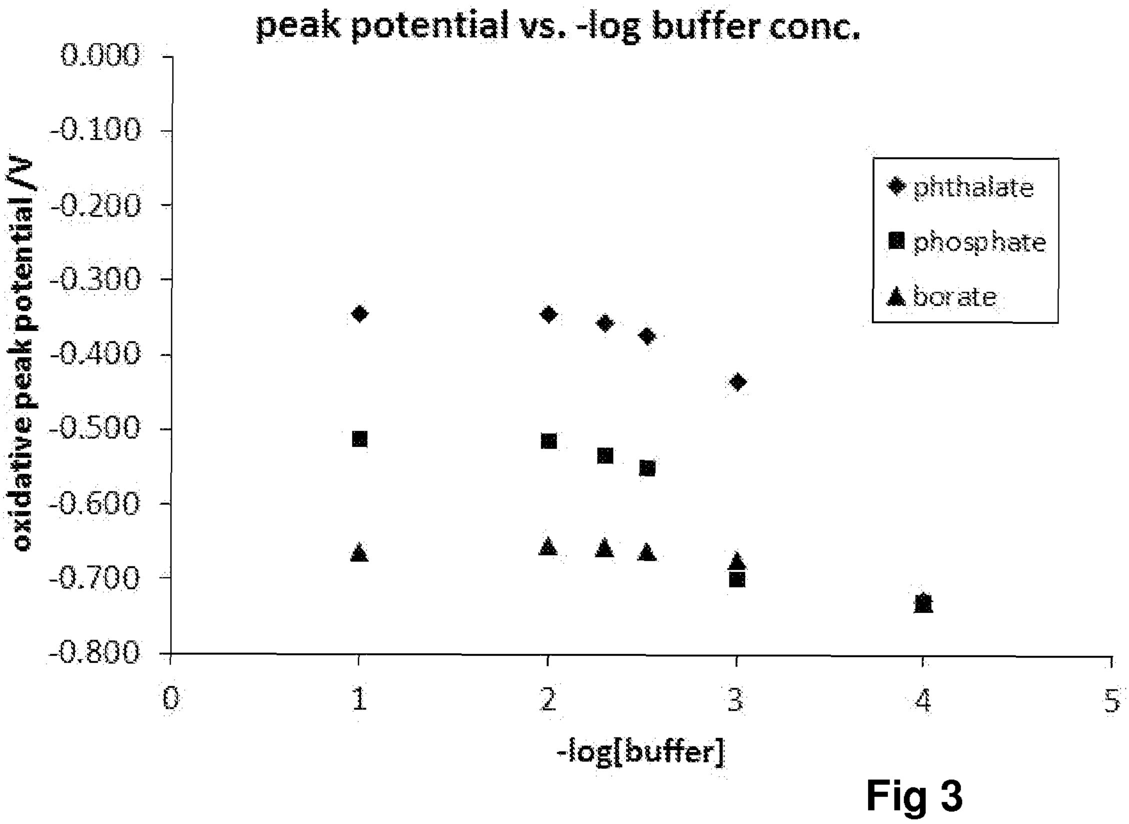
peak potential vs. -log buffer conc.
oxidative peak potential /V
0.000
-0.100
-0.200
-0.300
-0.400
-0.500
-0.600
-0.700
-0.800
0
1
2
3
4
5
-log[buffer]
phthalate
phosphate
borate

Fig 3

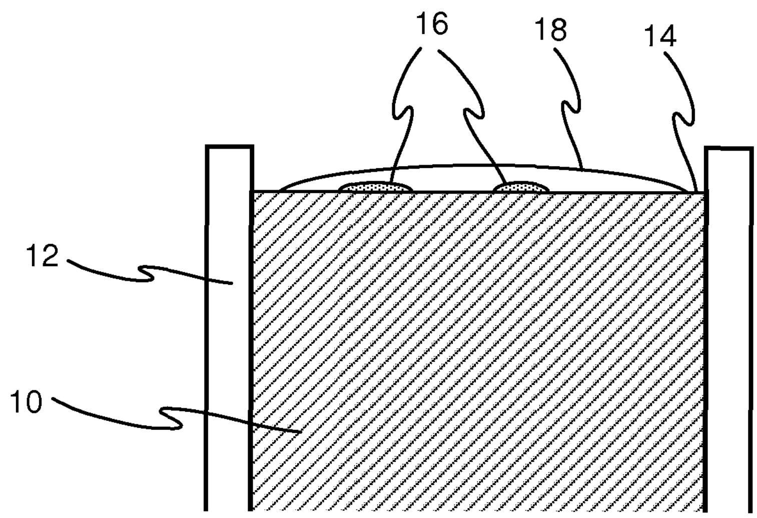
16
18
14
12
10

Fig 4

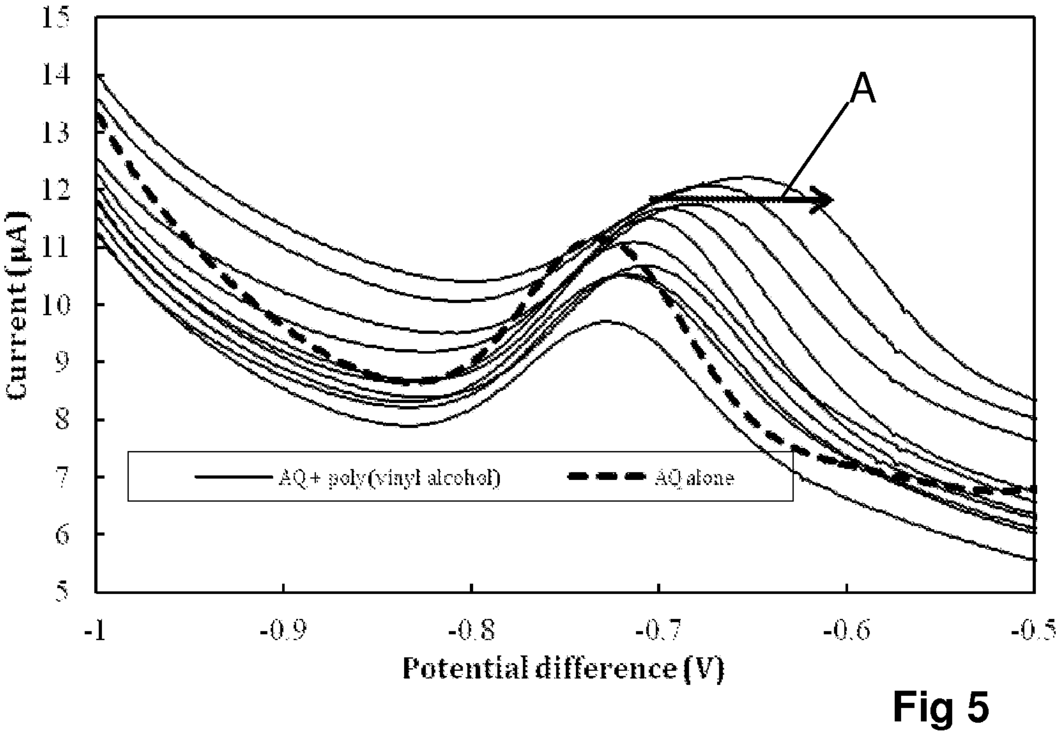

Current (µA)
Potential difference (V)
A
AQ + poly(vinyl alcohol)
AQ alone
15
14
13
12
11
10
9
8
7
6
5
-1
-0.9
-0.8
-0.7
-0.6
-0.5


Fig 5

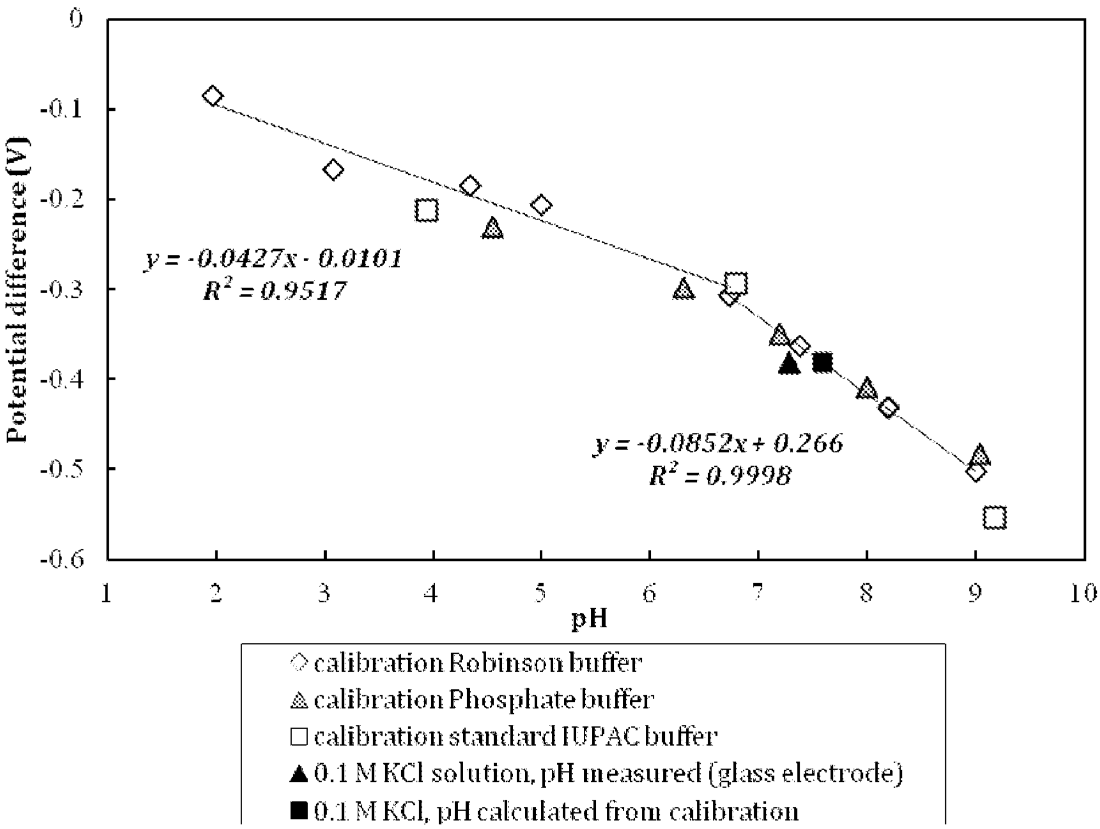

Potential difference (V)
pH
y = -0.0427x - 0.0101
R² = 0.9517
y = -0.0852x + 0.266
R² = 0.9998
0
-0.1
-0.2
-0.3
-0.4
-0.5
-0.6
1
2
3
4
5
6
7
8
9
10
calibration Robinson buffer
calibration Phosphate buffer
calibration standard IUPAC buffer
0.1 M KCl solution, pH measured (glass electrode)
0.1 M KCl, pH calculated from calibration


Fig 6

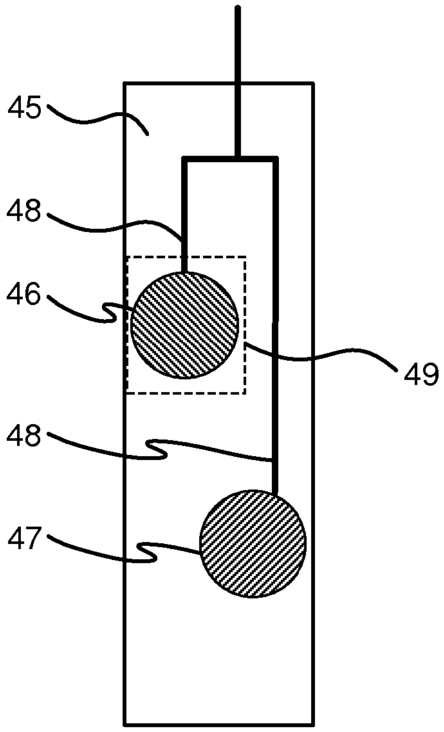


Fig 7

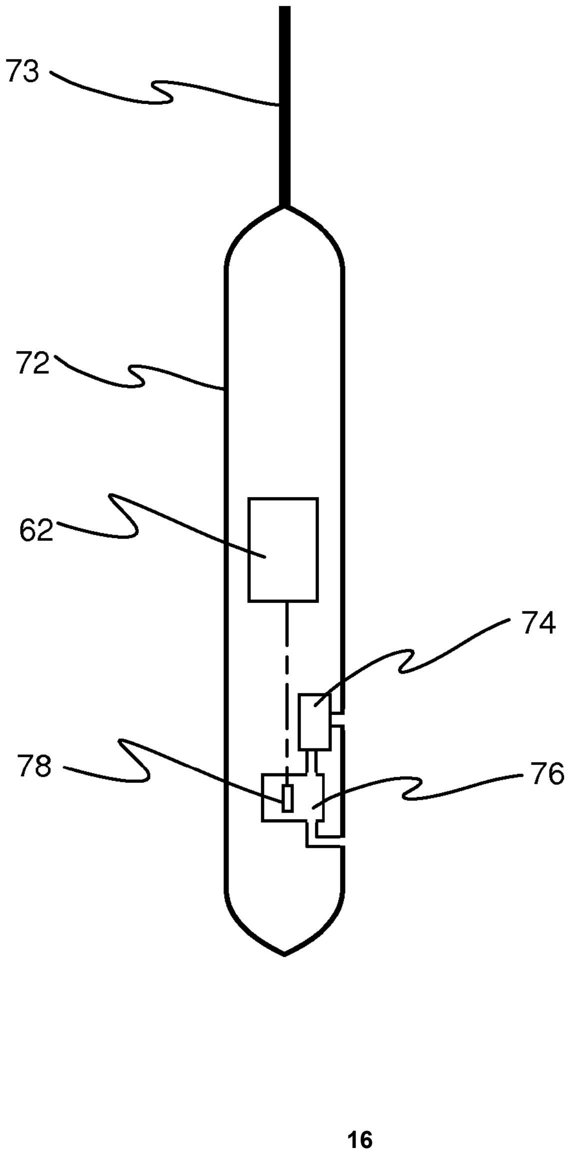


Fig 8

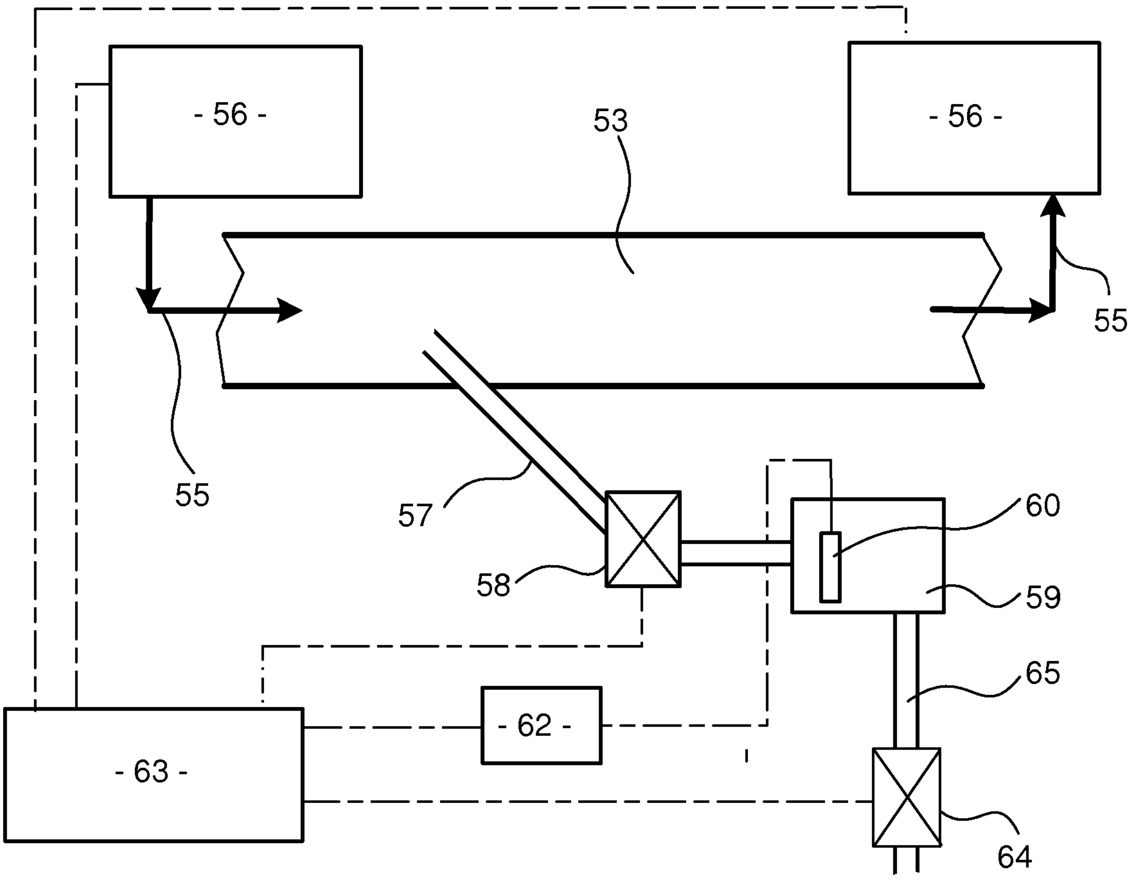


Fig 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005066618 A
- WO 2007034131 A
- WO 2010001082 A
- WO 2010111531 A
- EP 0218530 A
- WO 2010106404 A


### Non-patent literature cited in the description


- **QUAN et al.** *J. Am.Chem.Soc.*, 2007, vol. 129, 12847-12856
- **BATCHELOR-MCAULEY et al.** Voltammetric Responses of Surface-Bound and Solution-Phase Anthraquinone Moieties in the Presence of Unbuffered Aqueous Media. *J. Phys. Chem. C*, 2011, vol. 115, 714-718
- **OYAMA et al.** Hydrogen Ion Selective Microelectrode Prepared by Modifying an Electrode with Polymers. *Anal. Chem.*, 1987, vol. 59, 258-262
- **NAGLE ; MOROWITZ**. Molecular mechanisms for proton transport in membranes. *Proc. Natl. Acad. Sci. USA*, 1978, vol. 75, 298-302